# FASCICULE DE BREVET EUROPEEN

(11) **EP 2 750 935 B1**
(45) Date de publication et mention de la délivrance du brevet: **09.09.2015**
(21) Numéro de dépôt: 12741043.9
(22) Date de dépôt: 06.07.2012
(51) Int. Cl.: B60R 21/215, B60R 21/16, B60R 21/205, B60K 37/00

(54) **DISPOSITIF DE SECURITE POUR VEHICULE**
FAHRZEUGSICHERHEITSVORRICHTUNG
VEHICLE SAFETY DEVICE

(30) Priorité: 01.09.2011 FR 1157761
(43) Date de publication de la demande: 09.07.2014
(73) Titulaire: Faurecia Intérieur Industrie, 92000 Nanterre (FR)
(72) Inventeur: EDELINE, Franck, F-60590 Le Vaumain (FR)
(74) Mandataire: Cabinet Plasseraud
(86) Numéro de dépôt international: PCT/FR2012/051599
(87) Numéro de publication internationale: WO 2013/030473

(56) Documents cités:
- WO-A1-2007/128921
- DE-A1- 10 306 385
- FR-A1- 2 842 472
- FR-A1- 2 921 611
- US-A1- 2007 040 359
- US-A1- 2009 134 608

## Description

La présente invention concerne un dispositif de sécurité agencé entre un élément d'habillage intérieur de véhicule et un coussin gonflable de sécurité, comprenant :
- un canal de tir adapté pour recevoir le coussin gonflable de sécurité, le canal de tir délimitant une ouverture de déploiement du coussin gonflable ;
- un volet recouvrant au moins en partie l'ouverture à l'état non gonflé du coussin gonflable ;
- une liaison charnière reliant le volet au canal de tir ; et
- un déflecteur relié au canal de tir et destiné à être disposé en regard de la liaison charnière.

Un tel dispositif est généralement agencé sous un élément d'habillage intérieur. L'élément d'habillage intérieur présente une fenêtre délimitée par une ligne de moindre résistance et une région périphérique entourant la fenêtre. Dans un tel agencement, l'élément d'habillage intérieur recouvre le dispositif de sécurité sur lequel est fixé le coussin gonflable de sécurité, la fenêtre de l'élément d'habillage intérieur étant en regard de l'ouverture de déploiement du coussin gonflable délimitée par le canal de tir et le volet du dispositif étant fixé à la fenêtre de l'élément d'habillage.

Lorsque le coussin de sécurité est gonflé, il remplit dans un premier temps le volume délimité par les parois internes du canal de tir et le volet pour venir en percussion contre la face inférieure du volet, provoquant ainsi l'ouverture de la fenêtre suivant la ligne de moindre résistance. Le coussin de sécurité traverse alors, dans un deuxième temps, la fenêtre de l'élément d'habillage pour se déployer dans l'habitacle du véhicule afin d'en protéger les occupants.

Compte tenu de la rapidité d'ouverture du volet, des températures extrêmes auxquelles est soumis le dispositif de sécurité et des contraintes appliquées par le coussin de sécurité sur le dispositif de sécurité, on a constaté que la liaison charnière pouvait se déchirer partiellement ou totalement. Dans le cas d'une rupture totale de la liaison charnière, le volet risque d'être projeté dans l'habitacle du véhicule vers les occupants du véhicule.

Pour limiter ce risque, on connaît un dispositif, par exemple d'après le document DE 103 06 385 A1, comprenant d'une part un canal de tir et un déflecteur relié au canal de tir, et d'autre part un élément d'habillage dans lequel est ménagée une fenêtre, la fenêtre étant reliée à une région périphérique de l'élément d'habillage par une liaison charnière. Ainsi, lors d'un choc subi par le véhicule, le coussin gonflable de sécurité déplace la fenêtre pour se déployer dans l'habitacle du véhicule. La liaison charnière, protégée par le déflecteur, permet à la fenêtre de pivoter par rapport au canal de tir tout en retenant la fenêtre afin d'éviter qu'elle soit projetée dans l'habitacle et qu'elle blesse un passager. Avec ce type de dispositif et d'agencement, la liaison charnière est intégrée à l'élément d'habillage. L'étape du procédé de fabrication du dispositif intégrant la liaison charnière à l'élément d'habillage nécessite ainsi un outillage plus complexe, ce qui rend le dispositif moins fiable et plus coûteux. En outre, le fait d'intégrer la charnière à l'élément de d'habillage peut générer des défauts d'aspect sur la partie supérieure de l'élément d'habillage, c'est-à-dire des défauts visibles par les occupants du véhicule, suivant si l'élément d'habillage est une pièce revêtue d'une couche de revêtement épaisse ou si l'élément d'habillage est une pièce nue, c'est-à-dire non revêtue ou alors revêtue d'une couche de revêtement fine.

L'invention a pour but de proposer un dispositif de sécurité plus simple et moins coûteux.

A cet effet, l'invention a pour objet un dispositif de sécurité pour véhicule du type précité, caractérisé en ce que le canal de tir, le volet, la liaison charnière et le déflecteur sont venus de matière les uns avec les autres.

De par cette caractéristique, la fabrication ainsi que l'assemblage du dispositif sur le véhicule sont facilités, permettant de ce fait de réduire les coûts de production correspondants.

Le dispositif selon l'invention peut éventuellement comporter en outre une ou plusieurs des caractéristiques suivantes :
- le déflecteur est relié au canal de tir par une charnière film ;
- le déflecteur est fabriqué dans une position ouverte, dans laquelle le déflecteur est éloigné de la liaison charnière, puis replié sur le canal de tir dans une position fonctionnelle, dans laquelle le déflecteur est disposé en regard de la liaison charnière ;
- il comprend un système de maintien adapté pour maintenir le déflecteur en regard de la liaison charnière ;
- le système de maintien comprend une pluralité d'ergots agencés sur au moins l'un parmi le déflecteur et la liaison charnière, chaque ergot étant adapté pour coopérer avec une lumière correspondante ménagée dans au moins l'autre parmi le déflecteur et la liaison charnière ;
- le système de maintien comprend une pluralité de nervures agencées sur au moins l'un parmi le déflecteur et le volet, chaque nervure étant adaptée pour coopérer avec une rainure correspondante ménagée dans au moins l'autre parmi le déflecteur et le volet ;
- le déflecteur présente une forme de cornière adaptée pour recouvrir la liaison charnière ;
- la liaison charnière comprend une charnière présentant une section en forme de S ;
- le canal de tir et le déflecteur comportent des fenêtres de fixation d'un module de sécurité à coussin gonflable, les fenêtres de fixation étant placées respectivement en correspondance deux à deux ; et
- il est fabriqué en élastomère.

L'invention a également pour objet une planche de bord pour véhicule, comprenant un corps de planche, caractérisée en ce qu'elle comprend un dispositif tel que décrit précédemment fixé sur une surface intérieure du corps de planche.

L'invention a en outre pour objet un véhicule, caractérisé en ce qu'il comprend une planche de bord telle que définie ci-dessus.

L'invention sera mieux comprise à la lecture de la description qui va suivre d'un mode de réalisation de l'invention, donné uniquement à titre d'exemple en se référant aux dessins annexés, sur lesquels :
- la Figure 1 est une vue schématique en perspective de l'habitacle d'un véhicule équipé d'un dispositif de sécurité selon un mode de réalisation de l'invention ;
- la Figure 2 est une vue en coupe verticale longitudinale suivant le plan II de la Figure 1 ;
- la Figure 3 est une vue en perspective de dessous du dispositif de sécurité des Figures 1 et 2 dans un état initial d'assemblage sur le véhicule ;
- la Figure 4 est une vue similaire à celle de la Figure 2 illustrant le dispositif de sécurité dans un premier état intermédiaire d'assemblage sur le véhicule ; et
- la Figure 5 est une vue similaire à celle de la Figure 3 illustrant le dispositif de sécurité dans un deuxième état intermédiaire d'assemblage sur le véhicule.

Dans tout ce qui suit, les termes de position et d'orientation utilisés, tels que « avant », « arrière », s'entendent par rapport à la position d'un conducteur et au sens de marche du véhicule. Le terme « longitudinal » est défini par la direction avant-arrière et le terme « transversal » est défini selon la largeur du véhicule, c'est-à-dire selon une direction sensiblement perpendiculaire à la direction avant-arrière dans un plan horizontal.

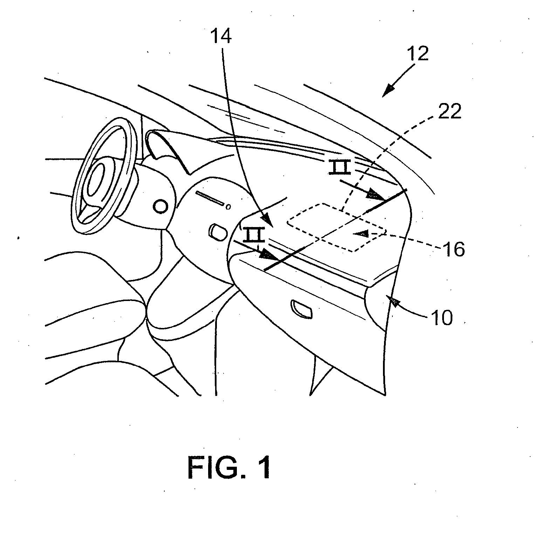

En référence aux Figures, on décrit un dispositif de sécurité agencé entre un élément d'habillage intérieur de véhicule et un coussin gonflable de sécurité. Un élément d'habillage intérieur de véhicule est par exemple, comme représenté de façon simplifiée sur la Figure 1, une planche de bord 10 d'un véhicule 12. L'élément d'habillage intérieur du véhicule peut cependant être tout type d'élément d'habillage comme un panneau de porte ou autre.

La planche de bord 10 comprend entre autres choses une couche de support rigide 14, souvent désignée par « corps de planche » par l'homme du métier, et un dispositif de sécurité à coussin gonflable 16 logé sous le corps de planche 14, du côté passager (à droite sur la Figure 1). Le corps de planche 14 est réalisé par une opération de moulage de type injection. Le corps de planche 14 est moulé avec des matériaux plastiques de type thermoplastique, par exemple en polypropylène PP avec ou sans renfort de fibre ou de charge minérale suivant la rigidité souhaitée. En variante, le matériau utilisé peut être un PC/ABS PolyCarbonate Acrylonitrile-Butadiène-Styrène.

En variante, la planche de bord 10 comprend en outre une peau recouvrant au moins une partie du corps de planche 14. Cette peau est par exemple réalisée en PVC Polychlorure de Vynile, en TPO Thermoplastique PolyOléfine, en TPU Thermoplastique PolyUréthane ou en tout autre matériau thermoplastique permettant de réaliser une peau souple. En variante, le corps de planche 14 peut être recouvert par du cuir ou un succédané de cuir.

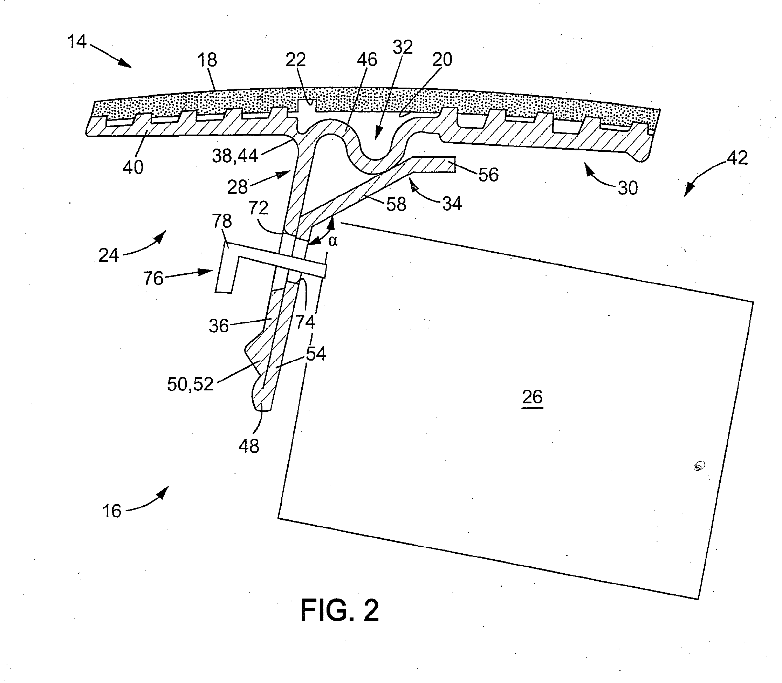

En référence à la Figure 2, le corps de planche 14 comporte une surface extérieure 18 visible par un passager du véhicule 12 et une surface intérieure 20.

Le corps de planche 14 comporte une ligne de moindre résistance 22 formée par une entaille pratiquée sur la surface intérieure 20, pour ne pas être visible depuis l'extérieur de la planche de bord 10, en regard du dispositif de sécurité 16.

La ligne de moindre résistance 22 est obtenue de manière classique, par exemple par enlèvement de matière par fraisage ou à l'aide d'un faisceau laser.

Dans l'exemple décrit ici, la ligne de moindre résistance 22 est une ligne continue fermée qui présente, en vue en plan (Figure 1), une forme sensiblement rectangulaire. Cette ligne continue fermée peut en variante se présenter sous une forme sensiblement trapézoïdale.

En variante, la ligne de moindre résistance 22 peut être une ligne continue ouverte qui présente, en vue en plan, sensiblement une forme de U ouverte vers l'avant du véhicule 12.

En variante encore, la ligne de moindre résistance 22 peut présenter, en vue en plan, sensiblement une forme de I ou de H.

Le dispositif de sécurité 16 comporte un cadre de support 24 fixé sur le corps de planche 14.

Un module de sécurité à coussin gonflable 26 est fixé sur le cadre de support 24.

De façon classique, le module de sécurité 26 comprend un boîtier dans lequel est agencé un coussin gonflable dans une position initiale pliée ainsi qu'un appareil de gonflage du coussin, tel qu'un appareil à gaz ou un appareil pyrotechnique, déclenché à la suite d'un choc subi par le véhicule 12.

Le cadre de support 24 comprend un canal de tir 28, un volet 30 articulé sur le canal de tir 28 par une liaison charnière 32, et un déflecteur 34 relié au canal de tir 28.

Le canal de tir 28 est adapté pour recevoir le module de sécurité 26 et guider le coussin gonflable lors de son déploiement.

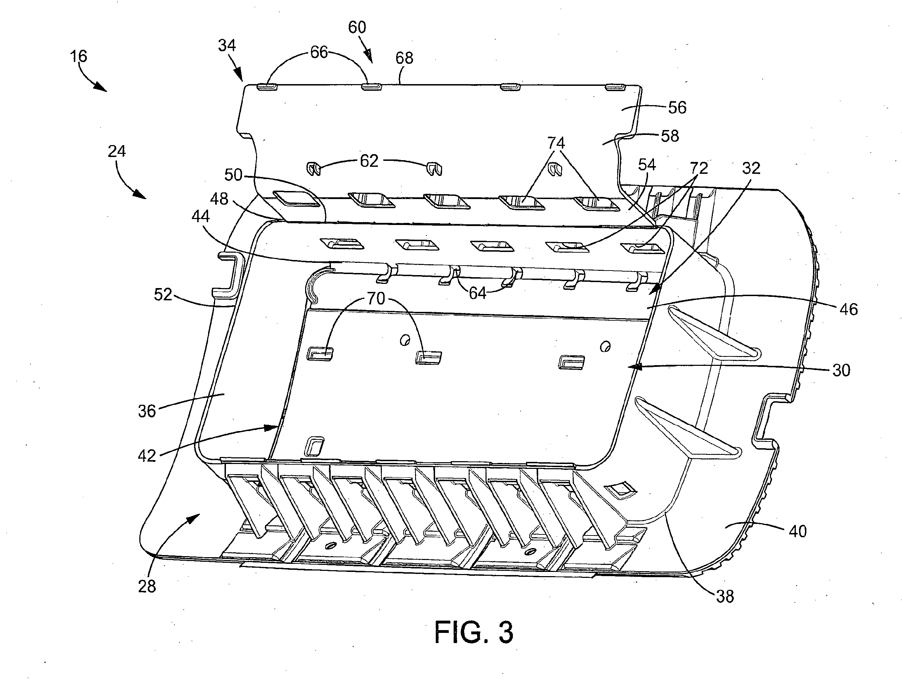

Comme on le voit mieux à la Figure 3, sur laquelle le module de sécurité 26 a été omis par souci de clarté, le canal de tir 28 présente par exemple une section sensiblement rectangulaire définie par une paroi latérale 36 fermée prolongée sensiblement radialement, à son extrémité supérieure 38, par un rebord périphérique 40. En variante, le canal de tir 28 présente une section sensiblement trapézoïdale.

Le rebord périphérique 40 est fixé sur la surface intérieure 20 du corps de planche 14, notamment à l'aide d'une technique de soudage par vibrations, infrarouge ou autre.

L'extrémité supérieure 38 de la paroi latérale 36 est disposée sensiblement en regard de la ligne de moindre résistance 22 et délimite ainsi une ouverture centrale 42 de déploiement du coussin gonflable. En variante, la ligne de moindre résistance 22 est décalée vers l'extérieur du canal de tir 28 par rapport à l'extrémité supérieure 38.

L'ouverture centrale 42 présente une forme sensiblement rectangulaire correspondant à la forme de la section du canal de tir 28. En variante, l'ouverture centrale 42 présente une forme sensiblement trapézoïdale.

Le volet 30 présente une forme sensiblement rectangulaire correspondant à la forme de l'ouverture centrale 42 de manière à recouvrir l'ouverture centrale 42 à l'état non gonflé du coussin gonflable. En variante, le volet 30 présente une forme sensiblement trapézoïdale.

Le volet 30 est fixé sur la surface intérieure 20 du corps de planche 14, notamment à l'aide d'une technique de soudage par vibrations, infrarouge ou autre.

Le volet 30 est relié à la partie avant 44 de l'extrémité supérieure 38 du canal de tir 28 par la liaison charnière 32.

Le volet 30 est ainsi articulé par rapport au canal de tir 28 sensiblement autour d'un axe transversal.

La liaison charnière 32 s'étend le long de la partie avant 44 de l'extrémité supérieure 38 du canal de tir 28 de manière à faire basculer le volet 30 vers l'avant lors du déploiement du coussin gonflable et de retenir le volet 30 sur le canal de tir 28 pour éviter de blesser un passager.

Dans l'exemple décrit ici, la liaison charnière 32 est formée par une charnière 46 de section sensiblement constante et d'épaisseur proche de celle du volet 30 et/ou du canal de tir 28, et est venue de matière avec le canal de tir 28 et le volet 30.

La charnière 46 présente une section sensiblement en forme de S de telle sorte que, lors du déploiement du coussin gonflable, le volet 30 bascule vers l'avant autour d'un axe transversal qui n'est pas fixe, donc avec plus de liberté en comparaison avec une rotation autour d'un axe fixe.

Le déflecteur 34 est relié au canal de tir 28 par une charnière film 48 venue de matière avec le canal de tir 28 et le déflecteur 34.

La charnière film 48 s'étend lé long de la partie avant 50 de l'extrémité inférieure 52 de la paroi latérale 36 du canal de tir 28.

Le déflecteur 34 présente sensiblement une forme de cornière et s'étend le long de la partie avant 50.

Le déflecteur 34 comprend une première paroi 54 et une deuxième paroi 56 sensiblement planes et s'étendant sensiblement perpendiculairement l'une par rapport à l'autre, la première paroi 54 étant reliée à la charnière film 48.

Le déflecteur 34 comprend une paroi intermédiaire 58 reliant les première et deuxième parois 54, 56 l'une à l'autre, la paroi intermédiaire 58 étant inclinée par rapport aux première et deuxième parois 54, 56.

La paroi intermédiaire 58 est inclinée d'un angle α par rapport à la première paroi 54, α étant avantageusement compris entre 100° et 170°, de préférence sensiblement égale à 135°.

Le canal de tir 28, le volet 30, la liaison charnière 32 et le déflecteur 34 sont venus de matière les uns avec les autres.

Autrement dit, le cadre de support 24 est réalisé en une seule pièce.

Le cadre de support 24 est fabriqué notamment à partir d'une matière plastique, en particulier une matière plastique élastomère, naturelle par exemple du caoutchouc ou synthétique du type TPE thermoplastique élastomère par exemple un EPDM, et obtenue par exemple par un procédé de moulage par injection ne nécessitant alors qu'une seule étape d'injection. Le cadre de support 24 est fabriqué de telle sorte que le déflecteur 34 soit initialement dans une position ouverte (Figure 3) dans laquelle le déflecteur 34 s'étend sensiblement dans le prolongement du canal de tir 28 depuis la charnière film 48.

Le déflecteur 34 venu de matière avec le reste du cadre de support 24 est donc également en élastomère. Bien que cette matière soit inhabituelle pour réaliser le déflecteur 34, il apparaît avantageux de le réaliser ainsi car les risques de casse du déflecteur sont ainsi réduits tant lors de la fabrication que lors du gonflement du coussin de sécurité.

Dans la position ouverte, le déflecteur 34 est ainsi éloigné de la liaison charnière 32.

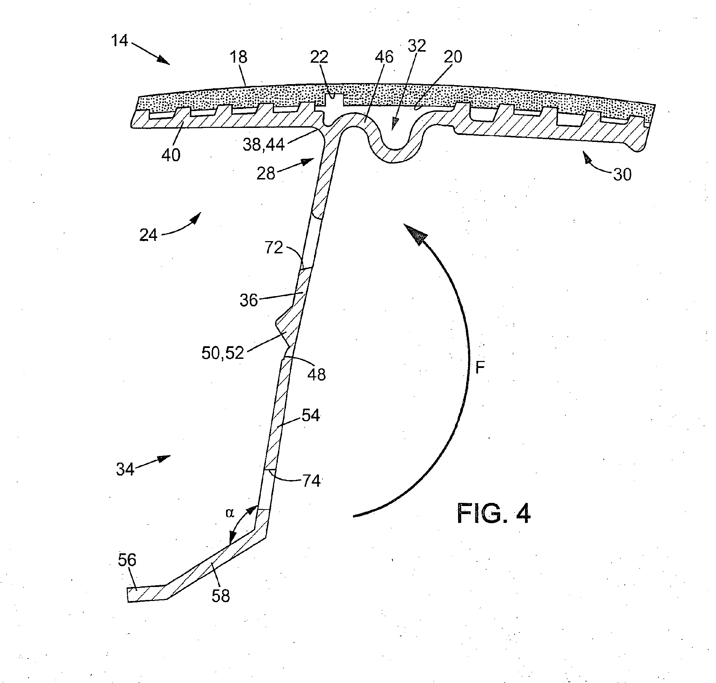

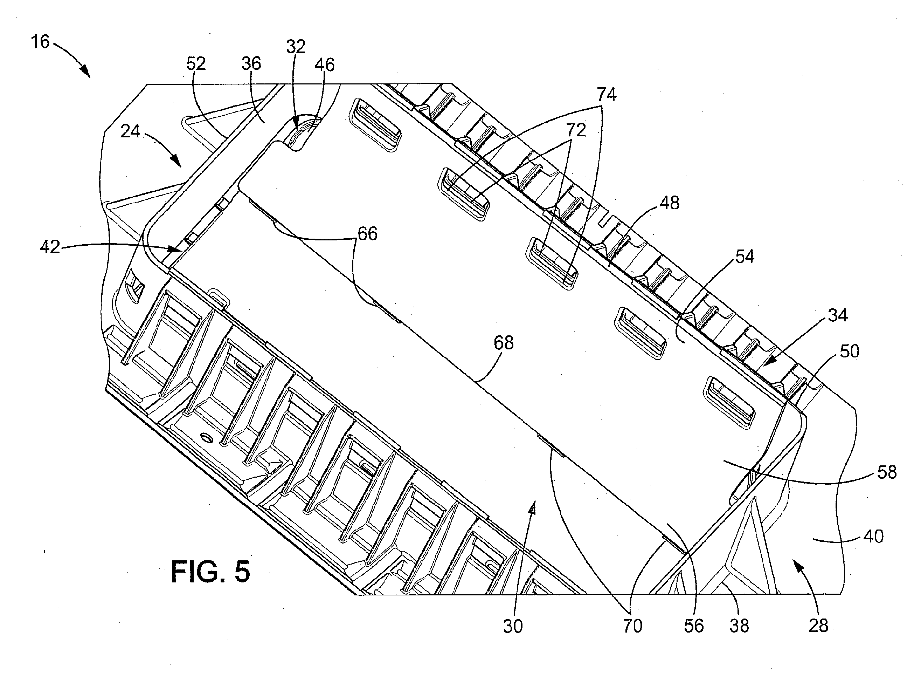

Le déflecteur 34 est ensuite replié autour de la charnière film 48, comme indiqué par la flèche F sur la Figure 4, dans une position fonctionnelle dans laquelle le déflecteur 34 est disposé en regard de la liaison charnière 32 (Figures 2 et 5).

Dans la position fonctionnelle, la première paroi 54 du déflecteur 34 recouvre ainsi le côté avant de la paroi latérale 36 du canal de tir 28, la paroi intermédiaire 58 du déflecteur 34 recouvre la liaison charnière 32 et la deuxième paroi 56 du déflecteur 34 recouvre une portion avant du volet 30. Ainsi, la première paroi 54 du déflecteur 34 permet avantageusement de renforcer la paroi latérale 36 du canal de tir 28 par doublement des épaisseurs. Dans cette position, le déflecteur 34 protège la charnière 32 du coussin lors du déploiement du coussin gonflable. En outre, dans cette position, le déflecteur 34 permet avantageusement de protéger la charnière 32 de l'outil de soudure lors de l'opération de soudage.

Le déflecteur 34 est moulé dans la position ouverte avec le reste du cadre de support 24, puis est fixé dans sa position fonctionnelle.

Le dispositif de sécurité 16 comprend un système de maintien 60 adapté pour maintenir le déflecteur 34 dans la position fonctionnelle.

Le système de maintien 60 comprend une pluralité d'ergots 62 venus de matière avec le déflecteur 34 et faisant saillie de la paroi intermédiaire 58.

Chaque ergot 62 est adapté pour coopérer avec une lumière 64 correspondante ménagée dans la liaison charnière 32.

Ainsi, dans la position fonctionnelle du déflecteur 34, les ergots 62 sont reçus dans les lumières 64 respectives, notamment par encliquetage, pour maintenir le déflecteur 34 dans la position fonctionnelle.

Les ergots 62/lumières 64 servent également à positionner correctement le déflecteur 34 par rapport à la liaison charnière 32, notamment lorsque le déflecteur 34 passe de sa position ouverte à sa position fonctionnelle.

Les lumières 64 de la liaison charnière 32 forment des allégements de matière qui permettent de limiter la propagation à toute la liaison charnière 32 d'une rupture d'une partie seulement de la liaison charnière 32 qui pourrait avoir lieu en raison d'une vitesse élevée de pivotement du volet 30 due à un déploiement brutal du coussin gonflable.

Ces allégements de matière permettent également de limiter les efforts appliqués à la liaison charnière 32 lors du pivotement du volet 30.

En variante, les ergots 62 peuvent être prévus sur la liaison charnière 32 et les lumières 64 peuvent être prévues sur le déflecteur 34.

En variante encore, les ergots 62 et les lumières 64 peuvent être prévus sur la liaison charnière 32 et sur le déflecteur 34 de façon alternée.

Le système de maintien 60 comprend également une pluralité de nervures 66 venues de matière avec le déflecteur 34 et faisant saillie du bord libre 68 de la deuxième paroi 56.

Chaque nervure 66 est adaptée pour coopérer avec une rainure 70 correspondante ménagée dans le volet 30.

Ainsi, dans la position fonctionnelle du déflecteur 34, les nervures 66 sont reçues dans les rainures 70 respectives, notamment par encliquetage, pour maintenir le déflecteur 34 dans la position fonctionnelle.

Les nervures 66/rainures 70 servent également à positionner correctement le déflecteur 34 par rapport au volet 30.

En variante, les nervures 66 peuvent être prévues sur le volet 30 et les rainures 70 peuvent être prévues sur le déflecteur 34.

En variante encore, les nervures 66 et les rainures 70 peuvent être prévues sur le volet 30 et sur le déflecteur 34 de façon alternée.

Ainsi, dans la position fonctionnelle du déflecteur 34, la première paroi 54 du déflecteur 34 est fixée à la paroi latérale 36 du canal de tir 28 par les ergots 62 et les lumières 64, et la deuxième paroi 56 du déflecteur 34 est fixée au volet 30 par les nervures 66 et les rainures 70. L'angle α de la paroi intermédiaire 58 par rapport à la première paroi 54 associé à l'agencement des première et deuxième parois 54, 56 du déflecteur 34 sur le canal de tir 28 permet avantageusement d'offrir au déflecteur 34 la résistance nécessaire à la protection de la charnière 32 et à la déviation du coussin gonflable lors de son gonflement, même si le déflecteur 34 est réalisé en matière plastique élastomère.

Une pluralité de fenêtres 72, 74 sont pratiquées respectivement dans le côté avant de la paroi latérale 36 du canal de tir 28 et dans la première paroi 54 du déflecteur 34, en correspondance deux à deux, de manière à recevoir des organes de fixation 76 du module de sécurité 26, par exemple des crochets de fixation 78 (Figure 2).

Le cadre de support 24 peut être fixé sur la surface intérieure 20 du corps de planche 14 avant ou après le rabattement du déflecteur 34 dans la position fonctionnelle.

Le fonctionnement du dispositif de sécurité 16 est expliqué ci-dessous.

Lors d'un choc subi par le véhicule 12, le coussin gonflable du module de sécurité 26 se déploie.

Le volet 30 du dispositif de sécurité 16 est alors entraîné en pivotement sous l'action de poussée du coussin gonflable, et la ligne de moindre résistance 22 du corps de planche 14 cède de sorte que le volet 30 s'ouvre et tourne autour de la liaison charnière 32 pour libérer l'ouverture 42 et permettre le déploiement du coussin gonflable dans l'habitacle du véhicule 12.

Simultanément, les ergots 62/lumières 64 et les nervures 66/rainures 70 se désengagent respectivement les uns des autres, désolidarisant ainsi le déflecteur 34 du volet 30 et de la liaison charnière 32.

Sous l'action de poussée du coussin gonflable, la deuxième paroi 56 et la paroi intermédiaire 58 du déflecteur 34 basculent également vers l'avant, la première paroi 54 étant retenue sur le canal de tir 28 par la charnière film 48 et la paroi intermédiaire 58 étant toujours disposée en regard de la liaison charnière 32.

Le déflecteur 34 protège ainsi la liaison charnière 32 d'un heurt violent avec le coussin gonflable, limitant par conséquent les sollicitations mécaniques sur la liaison charnière 32 et donc les risques de rupture de la liaison charnière 32 et de projection du volet 30 dans l'habitacle.

Par ailleurs, l'inclinaison de la paroi intermédiaire 58 du déflecteur 34 vers le volet 30 et vers le centre de l'ouverture 42 permet de dévier le coussin gonflable lors de son déploiement vers le côté arrière du cadre de support 24, c'est-à-dire vers le côté opposé à la liaison charnière 32. Ceci participe à limiter les risques de rupture de la liaison charnière 32 et de projection du volet 30. Cela favorise également le basculement du volet 30 autour de la liaison charnière 32.

L'invention propose donc un dispositif de sécurité à coussin gonflable pour véhicule qui permet, du fait que le cadre de support est intégralement moulé d'une seule pièce, de faciliter non seulement la fabrication du dispositif mais également l'assemblage du dispositif sur le véhicule, réduisant par là même les coûts de production afférents.

En outre, la forme spécifique de la liaison charnière et du déflecteur permet d'offrir un renforcement du canal de tir et un pivotement optimal du volet lors du déploiement du coussin gonflable tout en assurant une bonne retenue du volet.

L'invention a été décrite en se référant à une planche de bord de véhicule, mais il est tout à fait possible d'appliquer le dispositif selon l'invention à tout équipement approprié de véhicule, par exemple un panneau de porte ou un siège.

## Revendications

1. Dispositif de sécurité (16) agencé entre un élément d'habillage intérieur de véhicule (12) et un coussin gonflable de sécurité, comprenant :
- un canal de tir (28) adapté pour recevoir le coussin gonflable de sécurité, le canal de tir (28) délimitant une ouverture (42) de déploiement du coussin gonflable ;
- un volet (30) recouvrant au moins en partie l'ouverture (42) à l'état non gonflé du coussin gonflable ;
- une liaison charnière (32) reliant le volet (30) au canal de tir (28) ; et
- un déflecteur (34) relié au canal de tir (28) et destiné à être disposé en regard de la liaison charnière (32),
**caractérisé en ce que** le canal de tir (28), le volet (30), la liaison charnière (32) et le déflecteur (34) sont venus de matière les uns avec les autres.

2. Dispositif (16) selon la revendication 1, **caractérisé en ce que** le déflecteur (34) est relié au canal de tir (28) par une charnière film (48).

3. Dispositif (16) selon la revendication 1 ou 2, **caractérisé en ce que** le déflecteur (34) est fabriqué dans une position ouverte, dans laquelle le déflecteur (34) est éloigné de la liaison charnière (32), puis replié sur le canal de tir (28) dans une position fonctionnelle, dans laquelle le déflecteur (34) est disposé en regard de la liaison charnière (32).

4. Dispositif (16) selon l'une quelconque des revendications 1 à 3, **caractérisé en ce qu'**il comprend un système de maintien (60) adapté pour maintenir le déflecteur (34) en regard de la liaison charnière (32).

5. Dispositif (16) selon la revendication 4, **caractérisé en ce que** le système de maintien (60) comprend une pluralité d'ergots (62) agencés sur au moins l'un parmi le déflecteur (34) et la liaison charnière (32), chaque ergot (62) étant adapté pour coopérer avec une lumière (64) correspondante ménagée dans au moins l'autre parmi le déflecteur (34) et la liaison charnière (32).

6. Dispositif (16) selon la revendication 4 ou 5, **caractérisé en ce que** le système de maintien (60) comprend une pluralité de nervures (66) agencées sur au moins l'un parmi le déflecteur (34) et le volet (30), chaque nervure (66) étant adaptée pour coopérer avec une rainure (70) correspondante ménagée dans au moins l'autre parmi le déflecteur (34) et le volet (30).

7. Dispositif (16) selon l'une quelconque des revendications 1 à 6, **caractérisé en ce que** le déflecteur (34) présente une forme de cornière adaptée pour recouvrir la liaison charnière (32).

8. Dispositif (16) selon l'une quelconque des revendications 1 à 7, **caractérisé en ce que** la liaison charnière (32) comprend une charnière (46) présentant une section en forme de S.

9. Dispositif (16) selon l'une quelconque des revendications 1 à 8, **caractérisé en ce que** le canal de tir (28) et le déflecteur (34) comportent des fenêtres (72, 74) de fixation d'un module de sécurité à coussin gonflable (26), les fenêtres de fixation (72, 74) étant placées respectivement en correspondance deux à deux.

10. Dispositif (16) selon l'une quelconque des revendications 1 à 9, **caractérisé en ce qu'**il est fabriqué en élastomère.

11. Planche de bord (10) pour véhicule (12), comprenant un corps de planche (14), **caractérisée en ce qu'**elle comprend un dispositif (16) selon l'une quelconque des revendications précédentes fixé sur une surface intérieure (20) du corps de planche (14).

12. Véhicule (12), **caractérisé en ce qu'**il comprend une planche de bord (10) selon la revendication 11.

## Patentansprüche

1. Sicherheitsvorrichtung (16), die zwischen einem Innenverkleidungselement eines Fahrzeugs (12) und einem Sicherheitsairbag angeordnet ist, umfassend:
- einen Schusskanal (28), der dazu vorgesehen ist, den Sicherheitsairbag aufzunehmen, wobei der Schusskanal (28) eine Öffnung (42) zur Entfaltung des Airbags begrenzt;
- eine Klappe (30), die zumindest teilweise die Öffnung (42) im nicht aufgeblasenen Zustand des Airbags bedeckt;
- eine Scharnierverbindung (32), die die Klappe (30) mit dem Schusskanal (28) verbindet; und
- eine Ablenkvorrichtung (34), die mit dem Schusskanal (28) verbunden und dazu bestimmt ist, gegenüber der Scharnierverbindung (32) angeordnet zu werden,
- **dadurch gekennzeichnet, dass** der Schusskanal (28), die Klappe (30), die Scharnierverbindung (32) und die Ablenkvorrichtung (34) miteinander aus einem Stück sind.

2. Vorrichtung (16) nach Anspruch 1, **dadurch gekennzeichnet, dass** die Ablenkvorrichtung (34) mit dem Schusskanal (28) durch ein Filmscharnier (48) verbunden ist.

3. Vorrichtung (16) nach Anspruch 1 oder 2, **dadurch gekennzeichnet, dass** die Ablenkvorrichtung (34) in einer offenen Position hergestellt wird, in der die Ablenkvorrichtung (34) von der Scharnierverbindung (32) entfernt ist, dann auf den Schusskanal (28) in eine Funktionsposition umgeklappt wird, in der die Ablenkvorrichtung (34) gegenüber der Scharnierverbindung (32) angeordnet ist.

4. Vorrichtung (16) nach einem der Ansprüche 1 bis 3, **dadurch gekennzeichnet, dass** sie ein Haltesystem (60) umfasst, das dazu vorgesehen ist, die Ablenkvorrichtung (34) gegenüber der Scharnierverbindung (32) zu halten.

5. Vorrichtung (16) nach Anspruch 4, **dadurch gekennzeichnet, dass** das Haltesystem (60) eine Vielzahl von Haken (62) umfasst, die auf mindestens einer von Ablenkvorrichtung (34) und Scharnierverbindung (32) angeordnet sind, wobei jeder Haken (62) dazu vorgesehen ist, mit einer entsprechenden Öffnung (64) zusammenzuwirken, die in mindestens der anderen von Ablenkvorrichtung (34) und Scharnierverbindung (32) angeordnet ist.

6. Vorrichtung (16) nach Anspruch 4 oder 5, **dadurch gekennzeichnet, dass** das Haltesystem (60) eine Vielzahl von Rippen (66) umfasst, die auf mindestens einer von Ablenkvorrichtung (34) und Klappe (30) angeordnet sind, wobei jede Rippe (66) dazu vorgesehen ist, mit einer entsprechenden Nut (70) zusammenzuwirken, die in mindestens der anderen von Ablenkvorrichtung (34) und Klappe (30) vorgesehen ist.

7. Vorrichtung (16) nach einem der Ansprüche 1 bis 6, **dadurch gekennzeichnet, dass** die Ablenkvorrichtung (34) eine Form eines Winkeleisens aufweist, das dazu angepasst ist, die Scharnierverbindung (32) abzudecken.

8. Vorrichtung (16) nach einem der Ansprüche 1 bis 7, **dadurch gekennzeichnet, dass** die Scharnierverbindung (32) ein Scharnier (46) umfasst, das einen S-förmigen Querschnitt aufweist.

9. Vorrichtung (16) nach einem der Ansprüche 1 bis 8, **dadurch gekennzeichnet, dass** der Schusskanal (28) und die Ablenkvorrichtung (34) Fenster (72, 74) zur Befestigung eines Sicherheitsmoduls mit Airbag (26) umfassen, wobei die Befestigungsfenster (72, 74) jeweils in paarweiser Übereinstimmung angeordnet sind.

10. Vorrichtung (16) nach einem der Ansprüche 1 bis 9, d **dadurch gekennzeichnet, dass** sie aus Elastomer hergestellt ist.

11. Armaturenbrett (10) für ein Fahrzeug (12), umfassend einen Armaturenbrettkörper (14), **dadurch gekennzeichnet, dass** es eine Vorrichtung (16) nach einem der vorhergehenden Ansprüche umfasst, die auf einer Innenseite (20) des Armaturenbrettkörpers (14) befestigt ist.

12. Fahrzeug (12), **dadurch gekennzeichnet, dass** es ein Armaturenbrett (10) nach Anspruch 11 umfasst.

## Claims

1. Safety device (16) positioned between an interior trim element of a vehicle (12) and an airbag, comprising:
- a chute channel (28) adapted to receive the airbag, the chute channel (28) delimiting an opening (42) for deployment of the airbag;
- a flap (30) at least partially covering the opening (42) when the airbag is in an uninflated state;
- a hinge connection (32) connecting the flap (30) to the chute channel (28); and
- a deflector (34) connected to the chute channel (28) and intended to be positioned facing the hinge connection (32),
**characterized in that** the chute channel (28), the flap (30), the hinge connection (32) and the deflector (34) are formed as one piece with one another.

2. Device (16) according to claim 1, **characterized in that** the deflector (34) is connected to the chute channel (28) by a film hinge (48).

3. Device (16) according to claim 1 or 2, **characterized in that** the deflector (34) is manufactured in an open position, where the deflector (34) is away from the hinge connection (32), and is then folded over the chute channel (28) into an operative position, where the deflector (34) is arranged facing the hinge connection (32).

4. Device (16) according to any one of claims 1 to 3, **characterized in that** it comprises a retention system (60) adapted to retain the deflector (34) in position facing the hinge connection (32).

5. Device (16) according to claim 4, **characterized in that** the retention system (60) comprises a plurality of lugs (62) arranged on at least one among the deflector (34) and the hinge connection (32), each lug (62) being adapted to cooperate with a corresponding aperture (64) formed in at least the other among the deflector (34) and the hinge connection (32).

6. Device (16) according to claim 4 or 5, **characterized in that** the retention system (60) comprises a plurality of ribs (66) arranged on at least one among the deflector (34) and the flap (30), each rib (66) being adapted to cooperate with a corresponding groove (70) formed in at least the other among the deflector (34) and the flap (30).

7. Device (16) according to any one of claims 1 to 6, **characterized in that** the deflector (34) has an angle bracket shape adapted for covering the hinge connection (32).

8. Device (16) according to any one of claims 1 to 7, **characterized in that** the hinge connection (32) comprises a hinge (46) having an S-shape cross-section.

9. Device (16) according to any one of claims 1 to 8, **characterized in that** the chute channel (28) and the deflector (34) comprise windows (72, 74) for attaching an airbag safety module (26), the attachment windows (72, 74) being respectively positioned in corresponding pairs.

10. Device (16) according to any one of claims 1 to 9, **characterized in that** it is made of elastomer.

11. Dashboard (10) for a vehicle (12), comprising a dashboard body (14), **characterized in that** it comprises a device (16) according to any of the above claims, attached to an inner surface (20) of the dashboard body (14).

12. Vehicle (12), **characterized in that** it comprises a dashboard (10) according to claim 11.
